# EUROPEAN PATENT SPECIFICATION

(11) **EP 4 076 073 B1**
(45) Date of publication and mention of the grant of the patent: **08.07.2026**
(21) Application number: 20820452.9
(22) Date of filing: 14.12.2020
(51) Int. Cl.: A24F 40/65, A24F 40/53, A24F 40/57, H04W 4/80, A24F 40/20, A24F 40/60, A24F 40/50

(54) **AN AEROSOL GENERATION DEVICE WITH A WIRELESS COMMUNICATION INTERFACE**
AEROSOLERZEUGUNGSVORRICHTUNG MIT DRAHTLOSER KOMMUNIKATIONSSCHNITTSTELLE
DISPOSITIF DE GÉNÉRATION D'AÉROSOL DOTÉ D'UNE INTERFACE DE COMMUNICATION SANS FIL

(30) Priority: 20.12.2019 EP 19218630
(43) Date of publication of application: 26.10.2022
(73) Proprietor: JT International SA, 1202 Geneva (CH)
(72) Inventor: BOUCHUIGUIR, Layth Sliman, 1293 Bellevue (CH)
(74) Representative: Gill Jennings & Every LLP
(86) International application number: PCT/EP2020/085910
(87) International publication number: WO 2021/122418

(56) References cited:
- WO-A1-2016/009202
- WO-A1-2018/202651
- WO-A1-2019/171017

## Description

### FIELD OF INVENTION

The present invention relates to an aerosol generating device. In particular, the invention relates to an aerosol generating device with a wireless communication interface.

### BACKGROUND TO THE INVENTION

There is a demand for aerosol generating devices with safety features which help to prevent unwanted users, such as children or thieves, from using the device. However, these safety features can negatively affect ease of use. It is an object of the present invention to address these competing demands.

In WO 2016/009202 A1, an inhalation device, a method of controlling an inhalation device and packaging for the device are disclosed.

### SUMMARY OF THE INVENTION

According to an aspect of the present invention there is provided an aerosol generating device configured to generate an aerosol for inhalation by a user, the aerosol generating device comprising a heater configured to heat an aerosol forming substrate to generate an aerosol; a wireless communication interface configured to communicate wirelessly with a user electronic device; and a controller configured to enable the generation of an aerosol for inhalation by a user when the wireless communication interface has established that a link with the user electronic device is available; wherein the controller is configured to enable pre-heating of an aerosol forming substrate when the wireless communication interface is establishing whether or not a link is available with the user electronic device; wherein the wireless communication interface is configured to search for a wireless link for a predetermined time period; and characterised in that the controller is configured to disable pre-heating of an aerosol forming substrate when the wireless communication interface has established that a wireless link is not available within the predetermined time period.

In this way, the device is able to undertake pre-heating of an aerosol forming substrate and scanning for a user electronic device at the same time. This improves the usability of the device because the user does not have to wait for the wireless link with the user electronic device to be found before the pre-heating can begin.

Preferably, the controller is configured to prevent or inhibit the generation of an aerosol for inhalation by the user when the wireless communication interface has not established that a wireless link is available with the user electronic device.

In this way, the security of the device is improved because the device cannot generate a desirable aerosol until a security condition is satisfied, which is that a wireless link with a user electronic device is available. This security advantage, however, does not compromise the utility of the device because pre-heating is enabled before the wireless communication interface has established that a wireless link is available. This means that the device can be nearly ready to use, and is able to generate an optimal aerosol quickly after it is established that a wireless link is available. The controller may inhibit the generation of an aerosol by only allowing the heater to operate at a threshold temperature below the optimum temperature for aerosol generation. Equally, the skilled person would understand that the aerosol may instead be prevented from being formed or inhaled by any other means. For example, inhalation could be prevented by blocking an airflow channel.

Preferably, the controller is configured to enable aerosol generation until an end of a vaping session, after the wireless communication interface has established that a wireless link is available with a user electronic device. In this way, the user does not have to wait for the device to establish if a link is available with the user electronic device before each vaping instance, or 'puff, thus increasing usability. Further, this allows the user to establish a link at the start of the vaping session, say, at the user's desk, and then move to another location, say, outside, without needing to maintain wireless link availability. This improves device flexibility and convenience of use.

Preferably, the device further comprises an indicator configured to indicate to the user a status of the aerosol generating device. In this way, any status of the device can be conveniently displayed to the user which increases satisfaction and usability of the device.

Preferably, the indicator comprises a light source configured to indicate the relative completion of a scanning or vaping operation, or the relative amount of a consumable resource remaining in the aerosol generating device. In this way, the user may be better informed on the status of the device by lighting up a portion of the light source proportionally or otherwise correspondingly to a status of the device. Examples of further improved status indicators include: the relative completion of the pre-heating operation; how much battery life is remaining in the device; how long until the scanning operation is complete; or how much of a consumable resource remains in the device. Providing the user with such information increases user satisfaction and usability. Further, providing an indicator in this way produces a stylish aerosol generating device with a high degree of functionality.

In one embodiment, the light source may be an elongate strip of adjacent LEDs configured to light up a portion of the strip corresponding to, for example, the progress of a task. In another embodiment, the light source may be a circular array of LEDs configured to light up an arc of LEDs corresponding to, for example, the amount of a resource remaining in the device. Equally, any light source and corresponding configuration capable of displaying the relative completion of a task or the amount of available resources may be used.

Preferably, the wireless communication interface is configured to stop searching for a wireless link if a wireless link with a user electronic device is found. In this way the device is more efficient and battery life may be improved.

Preferably, the controller is configured to enable pre-heating for a predetermined time period when the wireless communication interface has not established that a link with the user electronic device is available. In this way, safety and efficiency is improved by operating the heater for no longer than may be necessary.

Preferably, the controller is configured to enable pre-heating of the heater up to a predetermined temperature, which is below the temperature of vapour generation. In this way, the device prevents a desirable aerosol from forming unless the user electronic device is wirelessly available. Of course, the skilled person would understand that some amount of poor quality aerosol may be generated when the aerosol is heated up to the pre-determined temperature. This improves the safety of the device by preventing the heater from reaching aerosol generating temperatures unless the user electronic device is in proximity. Theft of the device is discouraged because the device cannot produce a desirable aerosol unless the user electronic device is wirelessly available. Further, this improves the efficiency of the device by preventing full heating of the aerosol forming substrate if the user electronic device is not available, such as in the case where the pre-heating is activated accidentally.

Preferably, the device comprises a temperature sensor for determining the temperature of the heater. In this way, the temperature of the heater can be tracked by the controller. This in turn enables the device to prevent overheating of components.

Preferably, the aerosol forming substrate comprises tobacco. In this way, the aerosol generating device may be used as a heat-not-burn aerosol generating device.

Preferably, the wireless communication interface is a Bluetooth interface. In this way, compatibility with user electronic devices is increased due to the prevalence of Bluetooth interfaces in common wireless devices. The skilled person would understand that any wireless protocol may be used in place or in addition.

Preferably, the user electronic device is a smartphone. In this way, the device operation is made more convenient due to the general prevalence of carrying a smartphone on one's person. The skilled person would understand that any wireless enabled electronic device, such as headphones, computers, or smartwatches, may be used in place or in addition.

Preferably, the device further comprises a memory in which identifiers for user electronic devices are stored. More preferably, the controller is configured to enable the generation of an aerosol for inhalation by a user when an identifier for a user electronic device in wireless communication with the aerosol generating device matches an identifier stored in the memory. In this way, multiple user electronic devices may be simultaneously linked or paired with the aerosol generating device thus allowing greater convenience for the user who may have devices paired, for example, at work and at home.

According to another aspect of the invention a method of operation for an aerosol generating device is provided, the method comprising the steps of: establishing, by performing a wireless search using a wireless communication interface for a predetermined time period, whether or not a wireless link between the aerosol generating device and a user electronic device is available; enabling the generation of an aerosol for inhalation by a user when a wireless communication interface has established that a wireless link is available with the user electronic device; enabling pre-heating of an aerosol forming substrate when the wireless communication interface is establishing whether or not a wireless link is available with the user electronic device; and characterised by disabling pre-heating of an aerosol forming substrate when the wireless communication interface has established that a wireless link is not available within the predetermined time period.

According to another aspect of the invention there is provided a non-transitory computer readable medium comprising executable instructions that, when executed by a computer, cause the computer to perform steps comprising: establishing, by performing a wireless search using a wireless communication interface for a predetermined time period, a wireless link between an aerosol generating device and a user electronic device; enabling the generation of an aerosol for inhalation by a user when the aerosol generating device is in wireless communication with the user electronic device; enabling pre-heating of an aerosol forming substrate when a wireless communication interface is establishing whether or not a wireless link is available with the user electronic device; and characterised by disabling pre-heating of an aerosol forming substrate when the wireless communication interface has established that a wireless link is not available within the predetermined time period.

### BREIF DESCRIPTION OF DRAWINGS

Embodiments of the invention are now described, by way of example, with reference to the drawings, in which:
Figure 1 is a schematic diagram of a system in an embodiment of the invention;
Figure 2 is a schematic diagram of a control system in an embodiment of the invention; and
Figure 3 is a flowchart showing a control sequence in an embodiment of the invention.

### DETAILED DESCRIPTION

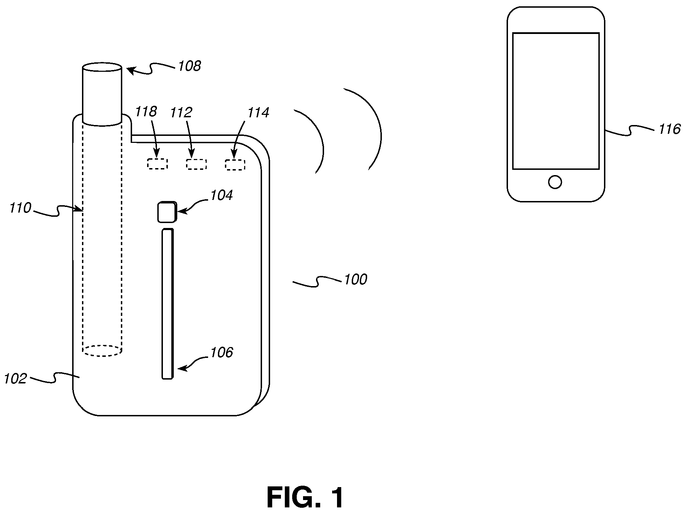

Figure 1 shows a schematic diagram of a system in an embodiment of the invention. An aerosol generating device 100 is provided and comprises an outer casing 102, a button 104 configured to detect an input signal from a user, an LED strip 106 configured to convey information about a status of the aerosol generating device 100, and a tobacco rod 108 which the user may place within a cavity 110 at which heating may be provided by a heater (not shown). A temperature sensor (not shown) is also provided at the cavity 110. The aerosol generating device 100 comprises a controller 112 which is configured to instruct the Bluetooth interface 114 to search wirelessly for a user smartphone 116 when an input signal from the user is received. The controller 112 is further configured to check the identification credentials, e.g., a MAC address, of the smartphone against credentials of paired user devices stored in the memory 118. The aerosol generating device further comprises a battery (not shown) to provide power to the device.

The casing 102 may comprise any appropriate material, such as plastic, metal, wood, or composites thereof. In this example, the button 104 is an activation unit configured to detect an input from a user and to respond by becoming active (or 'waking up'). An alternative activation unit may include a shake-sensor, a touch screen, a fingerprint sensor, a voice recognition unit or any other method of recognising an input from a user. The skilled person would understand that the aerosol generating device 100 may comprise more than one activation unit, each of which may be mapped to different functions.

In this example, the LED strip 106 is an elongate strip of adjacent LEDs. Equally, any indicator or feedback method may be used, such as other light sources, a mechanical indicator, an LCD display, a sound emitter, a vibration unit, or any other configuration of LEDs, for example a circular array of LEDs. The LED strip 106 may comprise a plurality of strips of LEDs, wherein each strip may optionally be of a different colour of LED. The LED strip 106 can indicate any status of the device such as indicating that scanning for the smartphone 116 is being undertaken, that the battery has a low charge level, that an error has occurred, or that a wireless link cannot be found. Additionally it can indicate the progress of a continuous operation such as pre-heating progress, scanning progress or charging progress. This may be achieved by turning on or off one or more LEDs, turning on or off a particular colour of LEDs or any such convenient selection of LEDs which conveniently inform the user of the status of the device. Remaining available resources of the device such as remaining battery charge or remaining aerosol forming substrate may be communicated to the user using the LED strip 106 by proportionately or otherwise correspondingly turning on or off a number of consecutive LEDs in the strip. The progress of any operation as described above may also be indicated in this manner. Alternatively or in addition, information may be conveyed to the user by altering the brightness of one or more LEDs, or by blinking the LEDs at a predetermined frequency.

The tobacco rod 108 may equally be any aerosol forming substrate. The skilled person would understand that any method of using a substrate with the aerosol generating device 100 may be used alternatively or in addition to the rod and cavity system disclosed in Figure 1. Similarly, any method of heating a substrate such as resistive heating or laser heating may be used. The temperature sensor may directly monitor the temperature of the heater, or the aerosol generating substrate. The temperature sensor may indirectly measure the heater or aerosol generating substrate temperature by monitoring the temperature of other components. The temperature sensor may be any temperature sensing component as known in the art, such as a thermocouple.

The skilled person would understand that the Bluetooth interface 114 may equally be any wireless protocol interface. The smartphone 116 may be any wirelessly enabled device equipped with a wireless interface such as wireless headphones, a smart watch, or a laptop.

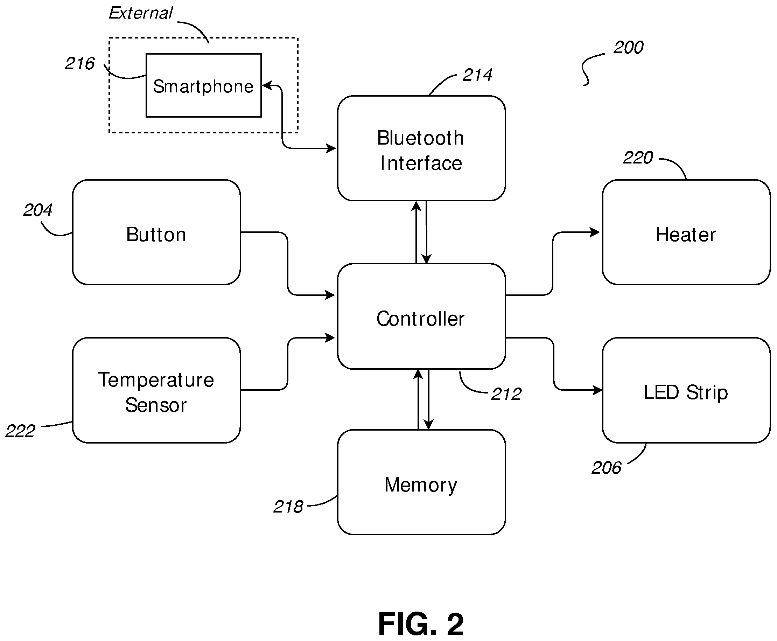

Figure 2 is a schematic diagram of a control system in an embodiment of the invention. This diagram shows an example flow of information or commands passing in or out of the controller 212. In an example use, the button 204 is pressed to initiate a vaping session which comprises one or more aerosol generation instances, or 'puffs'. The button 204 transmits the user's initiation of the vaping session to the controller 212. The controller 212 then communicates with the Bluetooth interface 214 to instruct a wireless search for a user smartphone 216. At the same time, the controller 212 instructs the heater 220 to begin pre-heating of the tobacco rod 108 up to a first threshold temperature, whilst the Bluetooth interface 214 searches wirelessly for the smartphone 216. The Bluetooth interface 214 provides the controller 212 with identity credentials of available wireless devices. After which, the controller 212 in turn performs a check against identity credentials previously stored in memory 218, e.g., from a Bluetooth pair operation. The controller 212 may instruct the progress of any of these operations to be displayed at the LED strip 206. If the controller 212 determines a match between devices found by the Bluetooth interface 214 and those stored in memory 218, then the controller 212 enables and instructs the heater 220 to operate at a second threshold temperature, which is higher than the first threshold temperature. This may also be indicated to the user at the LED strip 206. Once the tobacco rod 108 is heated to the second threshold temperature, the user inhales air through the exposed end of the tobacco rod 108. The airflow passing through the fully heated aerosol generating substrate generates an aerosol for the user to enjoy.

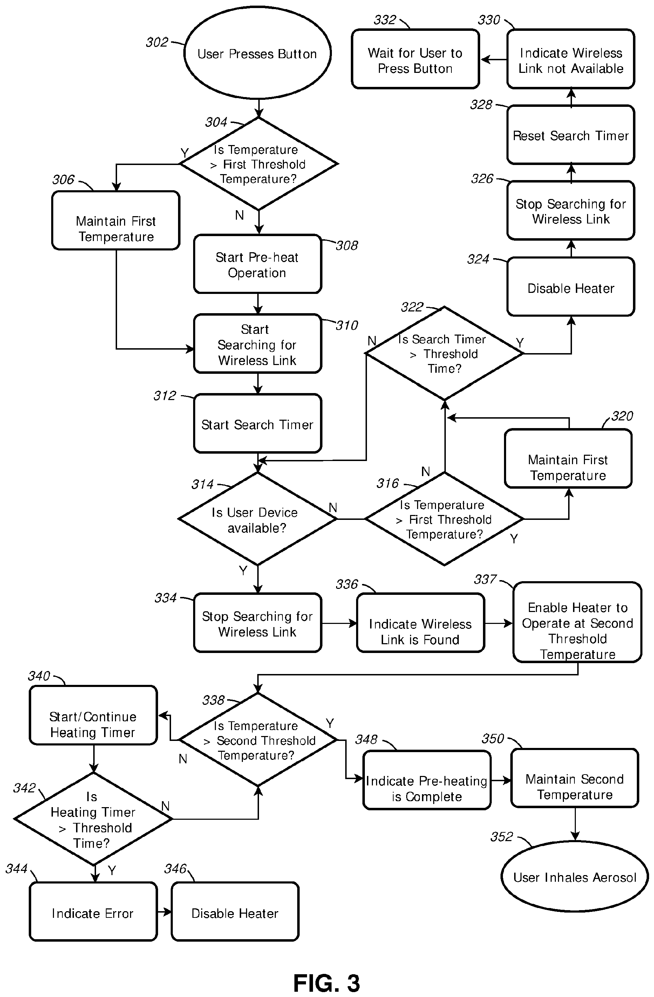

Figure 3 is a flowchart showing a control sequence in an embodiment of the invention. With reference to Figures 2 and 3, detailed operation of the device in an embodiment of the invention will now be described.

At step 302, the user presses the button 204 to 'wake up' the device, and to allow it to become active. Equally this step may be carried out by a shake sensor and a shaking of the device by a user, or any other means of input and input detection.

At step 304, the controller 212 checks the temperature of the heater 220, or any other component, e.g., the aerosol forming substrate, against a first predetermined threshold temperature value using the temperature sensor 222. The first predetermined threshold temperature corresponds to a safe pre-heating temperature below the optimal temperature for generating aerosol. The first threshold pre-heating temperature may be any temperature below the optimal aerosol generating temperature, such as 150 or 170 degrees Celsius. The skilled person would understand that the optimal temperatures will be chosen according to the specific embodiment of the invention, and would take into account, for example, the type of aerosol generating substrate being used. If the measured temperature is below the first threshold temperature, then a pre-heat operation is initiated at step 308. If the measured temperature is found to be greater than the first threshold temperature, then the initial pre-heating of the tobacco rod 108 is already complete, e.g., from a previous vaping session. The controller 212 then instructs the heater 220 to maintain its temperature at the first threshold pre-heating temperature, at step 306.

During the pre-heating operation at step 308, heating is applied by the heater 220 to the tobacco rod 108. This allows the temperature of the tobacco rod 108 to be increased from the temperature of the local environment towards the first threshold temperature. It may take several seconds, for example 20 seconds, for the aerosol forming substrate to reach the first threshold pre-heating temperature. During the temperature maintenance at step 306, the temperature may be continually monitored by the temperature sensor 222. In response, the controller 212 may adjust the power supply to the heater 220 to keep the temperature at the first threshold pre-heating temperature. Optionally, the controller 212 may be configured to enable pre-heating or temperature maintenance, or both, of the heater 220 only for a predetermined time period.

At step 310 the controller 212 instructs the Bluetooth interface 214 to search for available wireless links. The controller 212 may be configured to instruct the Bluetooth interface 214 to scan for user electronic devices only for a predetermined time period. A search timer may be initiated at step 312 to track how long the system has been searching for user electronic devices. This helps to improve efficiency by ensuring that a device cannot be searched for indefinitely. While the Bluetooth interface 214 is searching at step 310 the pre-heating operation may continue, provided the temperature of the aerosol forming substrate was found to be below the threshold temperature at step 304.

At step 314 the controller 212 checks if a wireless link with a user device is available. This step may comprise the controller 212 checking identity credentials (e.g., MAC address) of wireless devices found by the Bluetooth interface 214 against those stored in memory 218, and determining a positive result if a match is found. The Bluetooth interface 214 may establish availability of wireless devices via a direct wireless link with the smartphone 216 or may establish availability of an indirect link with the smartphone 216 via communication with intermediate wireless enabled devices. Prior to the vaping session the user may pair a device such as the smartphone 216 with the aerosol generating device 200 so that the aerosol generating device recognises that device as a known user device. Such pairing may be performed, for example, with standard Bluetooth pairing procedures. In an embodiment, the pairing may be initiated by holding down the button 204 for a prolonged time period. However, the skilled person would understand that pairing may be conducted through any other means such as online registration or a physical connection through an interface such as a micro USB interface.

If a wireless link with the smartphone 216 is not immediately found to be available at step 314, then the temperature of the heater 220 may be checked again at step 316 as described above at step 304. The controller 212 then instructs the heater 220 to maintain its temperature at the first threshold temperature at step 320, just as in step 306. Otherwise, if the temperature of the heater 220 does not exceed the first threshold temperature, then step 320 is skipped. At step 322, the controller 212 may check how long the Bluetooth interface 214 has been performing the search operation. If the threshold time has not been exceeded, then the controller 212 may return to step 314 and perform the loop comprising steps 314, 316 and 322 until a user device is found or the threshold time is exceeded.

If the threshold time is found to be exceeded at step 322, then the controller 212 disables the heater 220, thus halting any ongoing pre-heating or temperature maintenance, at step 324. To further improve device efficiency, at step 326 the controller 212 instructs the Bluetooth interface 214 to stop searching for an available wireless link. The controller 212 may reset the search timer at step 328, and instruct the LED strip 206 to indicate to the user that a wireless link with the smartphone 216 is not available. The controller 212 then enters an inactive mode, awaiting a further button press at step 332, after which the control sequence may begin again. Optionally, the controller 212 may be configured to allow a predetermined number of pre-heat operations to take place before a wireless link is found to be available, after which number the pre-heat operation may be disabled until a link is available. This advantageously increases the safety of the device by preventing, for example, a child from repeatedly pre- heating the device. This may be implemented by incrementing a counter whenever the pre-heat operation stops, and resetting the counter when a wireless link with a user electronic device is available, and checking the value of the counter before each pre-heat operation.

At step 314, if a wireless link with the user smartphone is available, the controller 212 instructs the Bluetooth interface 214 to stop searching for a user electronic device at step 334. Optionally, the controller 212 may also instruct the LED strip 206 indicate to the user that a wireless link is found to be available at step 336. Otherwise, the controller 212 would proceed to step 337.

At step 337, the controller 212 enables and instructs the heater 220 to operate at, or to be increased towards, the second threshold temperature, which corresponds to the optimal temperature for generating aerosol. The second threshold temperature may be, for example, 230 or 235 degrees Celsius. The tobacco rod 108 is then brought up to the optimal aerosol generating temperature by the heater 220.

In this way, the security of the device is improved because it can only be used to generate an optimal vapour when it is established at step 314 that a wireless link with a user smartphone is available. This generally means that the device is within a predetermined physical distance of the user's smartphone, which means that the owner of the smartphone can be presumed to be the person operating the device. The device can generate an optimal aerosol swiftly at step 337 because pre-heating up to a first threshold temperature has already been performed, which means the aerosol forming substrate has already had its temperature increased from the temperature of the environment to just below the temperature at which an optimal aerosol is generated. This improves usability of the device because the user does not need to wait for the aerosol forming substrate to be pre-heated from the local environment temperature after the security condition is satisfied (i.e. a wireless signal with a user smartphone is found to be available).

At step 338, the controller 212 checks the temperature of the heater 220 again. If the heater 220 has not reached the second threshold pre-heating temperature, then a heating timer may be initiated, or continued if it is already initiated, at step 340. The value of the heating timer is checked at step 342 against a threshold value which may correspond to a pre-determined 'timeout' time. If the heating timer exceeds the timeout time, this indicates that the heater 220 is not reaching desired temperatures in a usual amount of time. This could indicate the presence of an error in the system, e.g. a defective heater 220, or could indicate that the tobacco rod 108 is not properly inserted into the cavity 110. If the timeout time is exceeded, an error message is indicated at the LED strip 206 at step 344. For safety, the heater 220 is then disabled at step 346. Equally, the sequence of steps 338-346 which detect an error with the pre-heating process may be conducted at any other appropriate point in the control sequence, such as wherever the first threshold temperature is checked.

During normal operation of the aerosol generating device 200, the second threshold pre-heating temperature is reached before the timeout condition is satisfied, and this is indicated at step 348. At step 350, the controller 212 instructs the heater 220 to maintain its temperature at the second threshold temperature the duration of the vaping session. This in turn also maintains, or 'floats', the tobacco rod 108 at the second threshold temperature for the duration of the vaping session. By floating the temperature of the tobacco rod 108 the aerosol can be generated at any time during the vaping session by inhaling on the exposed end of the tobacco rod.

Before enabling aerosol generation, any number of further checks may be performed by the controller 212. For example, in the embodiment of Figure 1, an LED and a photodiode may be provided at the cavity 110 which detects the presence of a properly inserted tobacco rod 108. Alternatively or in addition, the controller 212 may be configured to check the battery levels remaining in the device and instruct the LED indicator 214 to display a warning if insufficient charge is remaining in the battery for a standard vaping session. Equally, these checks may be applied at any other convenient point in the control sequence.

A vaping session may be defined as a series of instances of aerosol generation over a relatively short period of time. For example, a vaping session may be defined as comprising a plurality of aerosol generation instances, or puffs, after a single pre-heat operation. At step 337, the controller 212 may be configured to enable aerosol generation for an entire vaping session once the Bluetooth interface 214 has established that a link is available with a user electronic device. This advantageously improves the usability of the device by preventing the need for continuous wireless link availability with the user electronic device 212. This enables the user to move around over the course of a vaping session to a region where a wireless link may, for example, not be available.

Alternatively or in addition, the controller 212 may be configured to enable aerosol generation at step 337 for a predetermined time period. This may be implemented by initiating a timer between step 337 and step 338, and performing an additional check to determine if the timer has exceeded a 'timeout' time value at regular intervals after step 348. A similar method may be used to implement a timeout feature which disables aerosol generation if a threshold time gap between consecutive inhalations is exceeded. Such a check may also be performed periodically, after step 348. This would detect the end of a vaping session without requiring the user to perform a specific action to turn off the device or initiate an inactive mode, thus improving efficiency and convenience. Any other method of defining and detecting the end of a vaping session may equally be used.

Once the user presses the button 204 to wake the device at step 302, the controller 212 may instruct the LED strip 206 to indicate the relative progress of the scanning operation or the pre-heating operation. This may occur, for example, at steps 308 and 310. The controller 212 may instruct the LED strip 206 to indicate the progress of the scanning operation until a wireless link is found, after which point the pre-heating progress may be indicated until pre-heating is complete. If, in another embodiment, multiple strips of adjacent LEDs are provided, the progress of multiple actions may be displayed simultaneously.

To indicate the progress of the pre-heating operation, the controller 212 may instruct the LED strip 206 to light up an increasing number of adjacent LEDs as the temperature of the tobacco rod 108 increases towards the first or second threshold temperatures. When the first or second respective threshold temperatures are reached, all LEDs may be lit up. Similarly, progress of wireless link searching may be indicated by incrementally lighting up LEDs in the strip at regular intervals until a link is found or the search timer exceeds the threshold time.

The controller 212 may instruct the LED strip 206 to blink or change colour to indicate whether or not a wireless link with a user electronic device has been found to be available. Advantageously, the aerosol generating device 200 may comprise a plurality of indicators to indicate different states or information to the user. For example, the end of a pre-heat operation may be indicated by a vibrator unit in addition or alternatively to the LED strip 206. Using multiple indicator types improves the usability of the device by making indicators clearer to the user. Additionally, the accessibility is improved by providing more than one sensory method of providing feedback, such as vibrational feedback for visually impaired users.

The pre-heating and temperature maintenance, or 'floating', operations as described above will now be described in greater detail.

In embodiments of the invention, the controller 212 controls the temperature of the heater 220 by adjusting the duty cycle (or power cycle) of power signal (e.g., Pulse Width Modulation, PWM, signal) supplied to the heater 220, or in other words, adjusting the duty cycle of the heater 220. In general terms, a duty cycle is the fraction of a period in which a signal, a system or device is active. The duty cycle of a device such as the heater 220 can be described as a percentage or ratio. For example, for a period of one second, the maximum duty cycle of 100% corresponds to continuous operation of the heater 220, whereas a lower duty cycle of 50% corresponds to the heater 220 being active for 0.5 seconds of each one second period. In one example embodiment, the period of the duty cycle of the heater 220 may be in the order of 1-2 ms, or may be considerably shorter or longer than 1-2 ms.

While the heater 220 is active, a constant predetermined heating voltage may be supplied to the heater 220 from the battery. While the heater 220 is not active, no voltage may be supplied to the battery. Thus, when the heater 220 is operated using a high duty cycle, the heater 220 generates a higher amount of heat or energy and the power consumption of the battery is also high. Conversely, when operated using a lower duty cycle, the heater 220 generates a relatively lower amount of heat or energy and thus also consumes less power from the battery. It has been found that operation of the heater 220 using a high duty cycle places the highest demands on the battery compared to any other components or modes of operation of the aerosol generating device 100. Thus, in order to maximise the battery life of the device, it is desirable to minimise the time spent in this operation mode unnecessarily, as is carried out by, for example, step 324 as described above.

During temperature increase operations of the aerosol generating device 100 (in the embodiments acting as heat-not-burn devices, these operations typically involve heating a tobacco stick from ambient temperature), such as where the temperature of the heater 220 is increased towards the first or second threshold temperatures, the heater 220 requires higher demand of energy to raise the temperature of the tobacco stick. Thus, the controller 212 operates the heater 220 using a high duty cycle to provide the required energy. In one example embodiment, the duty cycle may be greater than or equal to 50% during temperature increase operations, which may correspond to a power consumption of 16 W by the heater 220.

During temperature maintenance operations, the heater 220 does not require much energy (i.e., lower demand) and thus the heater 220 can be operated using a lower duty cycle. In one example, the heater 220 may be operated using a duty cycle of less than 50%, or even much less than 50%. In one example embodiment, the lower duty cycle corresponding to temperature maintenance operations may consume 3 W of power. Thus, pre-heating operations may place significantly higher demands on the battery than during temperature floating operations, such as when the temperature is floated at the second threshold for vaporisation.

The duty cycle during temperature increase operations, *D1*, and the duty cycle during temperature maintenance operations, *D2*, can be related by *D1=k***D2*, where k is a dimensionless coefficient much greater than 1 selected according to design parameters of a specific embodiment.

At the end of the vaping session, the duty cycle may be set to 0%, wherein no power is provided to the heater 220.

## Claims

1. An aerosol generating device (100) configured to generate an aerosol for inhalation by a user, the aerosol generating device comprising:
a heater (220) configured to heat an aerosol forming substrate (108) to generate an aerosol;
a wireless communication interface (114) configured to communicate wirelessly with a user electronic device (116); and
a controller (112) configured to enable the generation of an aerosol for inhalation by a user when the wireless communication interface has established that a wireless link with the user electronic device is available;
wherein the controller is configured to enable pre-heating of an aerosol forming substrate when the wireless communication interface is establishing whether or not a wireless link is available with the user electronic device;
wherein the wireless communication interface is configured to search for a wireless link for a predetermined time period; and
wherein the controller is configured to disable pre-heating of an aerosol forming substrate when the wireless communication interface has established that a wireless link is not available within the predetermined time period.

2. The aerosol generating device of claim 1, wherein the controller is configured to enable aerosol generation until the end of the vaping session, after the wireless communication interface has established that a wireless link is available with a user electronic device.

3. The aerosol generating device of any of the preceding claims, further comprising an indicator (106) configured to indicate to the user a status of the aerosol generating device.

4. The aerosol generating device of claim 3, wherein the indicator comprises an elongate light source configured to indicate the relative completion of a scanning or vaping operation, or the relative amount of a consumable resource remaining in the aerosol generating device.

5. The aerosol generating device of any of the preceding claims, wherein the controller is configured to enable pre-heating for a predetermined time period when the wireless communication interface has not established that a wireless link with the user electronic device is available.

6. The aerosol generating device of any of the preceding claims, wherein the controller is configured to enable pre-heating of the aerosol forming substrate up to a predetermined temperature, which is below the temperature of vapour generation.

7. The aerosol generating device of claim 6, further comprising a temperature sensor (222) for determining the temperature of the aerosol forming substrate.

8. The aerosol generating device of any of the preceding claims, wherein the aerosol forming substrate comprises tobacco.

9. The aerosol generating device of any of the preceding claims, wherein the wireless communication interface is a Bluetooth interface.

10. The aerosol generating device of any of the preceding claims, wherein the user electronic device is a smartphone.

11. The aerosol generating device of any of the preceding claims, further comprising a memory (218) in which identifiers for user electronic devices are stored.

12. The aerosol generating device of claim 11, wherein the controller is configured to enable the generation of an aerosol for inhalation by a user when an identifier for a user electronic device in wireless communication with the aerosol generating device matches an identifier stored in the memory.

13. A method of operation for an aerosol generating device (100), comprising the steps of:
establishing (310), using a wireless communication interface (114) of the aerosol generating device (100) to search for a wireless link for a predetermined time period, whether or not a wireless link between the aerosol generating device and a user electronic device (116) is available;
enabling (337) the generation of an aerosol for inhalation by a user when the wireless communication interface has established that a wireless link is available with the user electronic device;
enabling (308) pre-heating of an aerosol forming substrate (108) when the wireless communication interface is establishing whether or not a wireless link is available with the user electronic device; and
disabling pre-heating (324) of an aerosol forming substrate when the wireless communication interface has established that a wireless link is not available within the predetermined time period.

14. A non-transitory computer readable medium comprising executable instructions that, when executed by a controller (112) of an aerosol generating device (100), cause the controller to perform steps comprising:
establishing (310), using a wireless communication interface (114) of the aerosol generating device (100) to search for a wireless link for a predetermined time period, whether or not a wireless link between an aerosol generating device and a user electronic device (116) is available;
enabling (337) the generation of an aerosol for inhalation by a user when the wireless communication interface has established that a wireless link with the user electronic device is available;
enabling (308) pre-heating of an aerosol forming substrate (108) when the wireless communication interface is establishing whether or not a wireless link is available with the user electronic device; and
disabling pre-heating (324) of an aerosol forming substrate when the wireless communication interface has established that a wireless link is not available within the predetermined time period.

## Patentansprüche

1. Aerosolerzeugungsvorrichtung (100), die ausgebildet ist, ein Aerosol zur Inhalation durch einen Benutzer zu erzeugen, wobei die Aerosolerzeugungsvorrichtung Folgendes umfasst:
ein Heizelement (220), das ausgebildet ist, ein aerosolbildendes Substrat (108) zu erhitzen, um ein Aerosol zu erzeugen;
eine drahtlose Kommunikationsschnittstelle (114), die ausgebildet ist, drahtlos mit einem Benutzerendgerät (116) zu kommunizieren; und
eine Steuereinheit (112), die ausgebildet ist, die Erzeugung eines Aerosols zur Inhalation durch einen Benutzer zu aktivieren, wenn die drahtlose Kommunikationsschnittstelle ermittelt hat, dass eine drahtlose Verbindung mit dem Benutzerendgerät verfügbar ist;
wobei die Steuereinheit ausgebildet ist, das Vorheizen eines aerosolbildenden Substrats zu aktivieren, wenn die drahtlose Kommunikationsschnittstelle ermittelt, ob eine drahtlose Verbindung mit dem Benutzerendgerät verfügbar ist oder nicht;
wobei die drahtlose Kommunikationsschnittstelle ausgebildet ist, für einen vorgegebenen Zeitraum nach einer drahtlosen Verbindung zu suchen; und
wobei die Steuereinheit ausgebildet ist, das Vorheizen eines aerosolbildenden Substrats zu deaktivieren, wenn die drahtlose Kommunikationsschnittstelle ermittelt hat, dass innerhalb des vorgegebenen Zeitraums keine drahtlose Verbindung verfügbar ist.

2. Aerosolerzeugungsvorrichtung nach Anspruch 1, wobei die Steuereinheit ausgebildet ist, die Aerosolerzeugung bis zum Ende der Vapingsitzung zu aktivieren, nachdem die drahtlose Kommunikationsschnittstelle ermittelt hat, dass eine drahtlose Verbindung mit einem Benutzerendgerät verfügbar ist.

3. Aerosolerzeugungsvorrichtung nach einem der vorstehenden Ansprüche, die weiter eine Anzeigeeinrichtung (106) umfasst, die ausgebildet ist, dem Benutzer einen Status der Aerosolerzeugungsvorrichtung anzuzeigen.

4. Aerosolerzeugungsvorrichtung nach Anspruch 3, wobei die Anzeigeeinrichtung eine längliche Lichtquelle umfasst, die ausgebildet ist, den relativen Abschluss eines Scan- oder Vapingsvorgangs, oder die relative Menge einer in der Aerosolerzeugungsvorrichtung verbleibenden, verbrauchbaren Ressource anzuzeigen.

5. Aerosolerzeugungsvorrichtung nach einem der vorstehenden Ansprüche, wobei die Steuereinheit ausgebildet ist, das Vorheizen für einen vorgegebenen Zeitraum zu aktivieren, wenn die drahtlose Kommunikationsschnittstelle nicht ermittelt hat, dass eine drahtlose Verbindung mit dem Benutzerendgerät verfügbar ist.

6. Aerosolerzeugungsvorrichtung nach einem der vorstehenden Ansprüche, wobei die Steuereinheit ausgebildet ist, das Vorheizen des aerosolbildenden Substrats bis zu einer vorgegebenen Temperatur zu aktivieren, die unterhalb der Temperatur der Dampferzeugung liegt.

7. Aerosolerzeugungsvorrichtung nach Anspruch 6, die weiter einen Temperatursensor (222) zum Bestimmen der Temperatur des aerosolbildenden Substrats umfasst.

8. Aerosolerzeugungsvorrichtung nach einem der vorstehenden Ansprüche, wobei das aerosolbildende Substrat Tabak umfasst.

9. Aerosolerzeugungsvorrichtung nach einem der vorstehenden Ansprüche, wobei die drahtlose Kommunikationsschnittstelle eine Bluetooth-Schnittstelle ist.

10. Aerosolerzeugungsvorrichtung nach einem der vorstehenden Ansprüche, wobei das Benutzerendgerät ein Smartphone ist.

11. Aerosolerzeugungsvorrichtung nach einem der vorstehenden Ansprüche, die weiter einen Speicher (218) umfasst, in dem Kennungen für Benutzerendgeräte gespeichert sind.

12. Aerosolerzeugungsvorrichtung nach Anspruch 11, wobei die Steuereinheit ausgebildet ist, die Erzeugung eines Aerosols zur Inhalation durch einen Benutzer zu aktivieren, wenn eine Kennung für ein mit der Aerosolerzeugungsvorrichtung in drahtloser Kommunikation stehendes Benutzerendgerät mit einer im Speicher gespeicherten Kennung übereinstimmt.

13. Verfahren zum Betrieb einer Aerosolerzeugungsvorrichtung (100), umfassend die folgenden Schritte:
Ermitteln (310), unter Verwendung einer drahtlosen Kommunikationsschnittstelle (114) der Aerosolerzeugungsvorrichtung (100), um für einen vorgegebenen Zeitraum nach einer drahtlosen Verbindung zu suchen, ob eine drahtlose Verbindung zwischen der Aerosolerzeugungsvorrichtung und einem Benutzerendgerät (116) verfügbar ist oder nicht;
Aktivieren (337) der Erzeugung eines Aerosols zur Inhalation durch einen Benutzer, wenn die drahtlose Kommunikationsschnittstelle ermittelt hat, dass eine drahtlose Verbindung mit dem Benutzerendgerät verfügbar ist;
Aktivieren (308) des Vorheizens eines aerosolbildenden Substrats (108), wenn die drahtlose Kommunikationsschnittstelle ermittelt, ob eine drahtlose Verbindung mit dem Benutzerendgerät verfügbar ist oder nicht; und
Deaktivieren des Vorheizens (324) eines aerosolbildenden
Substrats, wenn die drahtlose Kommunikationsschnittstelle ermittelt hat, dass innerhalb des vorgegebenen Zeitraums keine drahtlose Verbindung verfügbar ist.

14. Nicht transitorisches computerlesbares Medium, umfassend ausführbare
Anweisungen, die, wenn sie von einer Steuereinheit (112) einer Aerosolerzeugungsvorrichtung (100) ausgeführt werden, die Steuereinheit veranlassen, Schritte durchzuführen, die Folgendes umfassen:
Ermitteln (310), unter Verwendung einer drahtlosen Kommunikationsschnittstelle (114) der Aerosolerzeugungsvorrichtung (100), um für einen vorgegebenen Zeitraum nach einer drahtlosen Verbindung zu suchen, ob eine drahtlose Verbindung zwischen einer Aerosolerzeugungsvorrichtung und einem Benutzerendgerät (116) verfügbar ist oder nicht;
Aktivieren (337) der Erzeugung eines Aerosols zur Inhalation durch einen Benutzer, wenn die drahtlose Kommunikationsschnittstelle ermittelt hat, dass eine drahtlose Verbindung mit dem Benutzerendgerät verfügbar ist;
Aktivieren (308) des Vorheizens eines aerosolbildenden Substrats (108), wenn die drahtlose Kommunikationsschnittstelle ermittelt, ob eine drahtlose Verbindung mit dem Benutzerendgerät verfügbar ist oder nicht; und
Deaktivieren des Vorheizens (324) eines aerosolbildenden Substrats, wenn die drahtlose Kommunikationsschnittstelle ermittelt hat, dass innerhalb des vorgegebenen Zeitraums keine drahtlose Verbindung verfügbar ist.

## Revendications

1. Dispositif (100) de génération d'aérosol configuré pour générer un aérosol pour inhalation par un utilisateur, le dispositif de génération d'aérosol comprenant :
un dispositif (220) de chauffage configuré pour chauffer un substrat (108) de formation d'aérosol pour générer un aérosol ;
une interface (114) de communication sans fil configurée pour communiquer sans fil avec un dispositif (116) électronique d'utilisateur ; et
un dispositif (112) de commande configuré pour activer la génération d'un aérosol pour inhalation par un utilisateur lorsque l'interface de communication sans fil a établi qu'une liaison sans fil avec le dispositif électronique d'utilisateur est disponible ;
dans lequel le dispositif de commande est configuré pour activer le préchauffage d'un substrat de formation d'aérosol lorsque l'interface de communication sans fil établit le fait de savoir si une liaison sans fil est ou non disponible avec le dispositif électronique d'utilisateur ;
dans lequel l'interface de communication sans fil est configurée pour rechercher une liaison sans fil pendant une période de temps prédéterminée ; et
dans lequel le dispositif de commande est configuré pour désactiver le préchauffage d'un substrat de formation d'aérosol lorsque l'interface de communication sans fil a établi qu'une liaison sans fil n'est pas disponible dans la période de temps prédéterminée.

2. Dispositif de génération d'aérosol selon la revendication 1, dans lequel le dispositif de commande est configuré pour activer la génération d'aérosol jusqu'à la fin de la session de vapotage, après que l'interface de communication sans fil a établi qu'une liaison sans fil est disponible avec un dispositif électronique d'utilisateur.

3. Dispositif de génération d'aérosol selon l'une quelconque des revendications précédentes, comprenant en outre un indicateur (106) configuré pour indiquer à l'utilisateur un état du dispositif de génération d'aérosol.

4. Dispositif de génération d'aérosol selon la revendication 3, dans lequel l'indicateur comprend une source lumineuse allongée configurée pour indiquer l'achèvement relatif d'un fonctionnement de balayage ou de vapotage, ou la quantité relative d'une ressource consommable restante dans le dispositif de génération d'aérosol.

5. Dispositif de génération d'aérosol selon l'une quelconque des revendications précédentes, dans lequel le dispositif de commande est configuré pour activer le préchauffage pendant une période de temps prédéterminée lorsque l'interface de communication sans fil n'a pas établi qu'une liaison sans fil avec le dispositif électronique d'utilisateur est disponible.

6. Dispositif de génération d'aérosol selon l'une quelconque des revendications précédentes, dans lequel le dispositif de commande est configuré pour activer le préchauffage du substrat de formation d'aérosol jusqu'à une température prédéterminée, laquelle est inférieure à la température de génération de vapeur.

7. Dispositif de génération d'aérosol selon la revendication 6, comprenant en outre un capteur de température (222) pour déterminer la température du substrat de formation d'aérosol.

8. Dispositif de génération d'aérosol selon l'une quelconque des revendications précédentes, dans lequel le substrat de formation d'aérosol comprend du tabac.

9. Dispositif de génération d'aérosol selon l'une quelconque des revendications précédentes, dans lequel l'interface de communication sans fil est une interface Bluetooth.

10. Dispositif de génération d'aérosol selon l'une quelconque des revendications précédentes, dans lequel le dispositif électronique d'utilisateur est un smartphone.

11. Dispositif de génération d'aérosol selon l'une quelconque des revendications précédentes, comprenant en outre une mémoire (218) dans laquelle des identifiants de dispositifs électroniques d'utilisateur sont stockés.

12. Dispositif de génération d'aérosol selon la revendication 11, dans lequel le dispositif de commande est configuré pour activer la génération d'un aérosol pour inhalation par un utilisateur lorsqu'un identifiant pour un dispositif électronique d'utilisateur en communication sans fil avec le dispositif de génération d'aérosol correspond à un identifiant stocké dans la mémoire.

13. Procédé de fonctionnement pour un dispositif (100) de génération d'aérosol, comprenant les étapes :
d'établissement (310), en utilisant une interface (114) de communication sans fil du dispositif (100) de génération d'aérosol pour rechercher une liaison sans fil pendant une période de temps prédéterminée, du fait de savoir si une liaison sans fil entre le dispositif de génération d'aérosol et un dispositif (116) électronique d'utilisateur est ou non disponible ;
d'activation (337) de la génération d'un aérosol pour inhalation par un utilisateur lorsque l'interface de communication sans fil a établi qu'une liaison sans fil est disponible avec le dispositif électronique d'utilisateur ;
d'activation (308) du préchauffage d'un substrat (108) de formation d'aérosol lorsque l'interface de communication sans fil établit le fait de savoir si une liaison sans fil est ou non disponible avec le dispositif électronique d'utilisateur ; et
de désactivation (324) du préchauffage d'un substrat de formation d'aérosol lorsque l'interface de communication sans fil a établi qu'une liaison sans fil n'est pas disponible dans la période de temps prédéterminée.

14. Support non transitoire lisible par ordinateur comprenant des instructions exécutables qui, lorsqu'elles sont exécutées par un dispositif (112) de commande d'un dispositif (100) de génération d'aérosol, amènent le dispositif de commande à réaliser des étapes comprenant :
l'établissement (310), en utilisant une interface (114) de communication sans fil du dispositif (100) de génération d'aérosol pour rechercher une liaison sans fil pendant une période de temps prédéterminée, du fait de savoir si une liaison sans fil entre un dispositif de génération d'aérosol et un dispositif (116) électronique d'utilisateur est ou non disponible ;
l'activation (337) de la génération d'un aérosol pour inhalation par un utilisateur lorsque l'interface de communication sans fil a établi qu'une liaison sans fil avec le dispositif électronique d'utilisateur est disponible ;
l'activation (308) du préchauffage d'un substrat (108) de formation d'aérosol lorsque l'interface de communication sans fil établit le fait de savoir si une liaison sans fil est ou non disponible avec le dispositif électronique d'utilisateur ; et
la désactivation (324) du préchauffage d'un substrat de formation d'aérosol lorsque l'interface de communication sans fil a établi qu'une liaison sans fil n'est pas disponible dans la période de temps prédéterminée.
